# EUROPÄISCHE PATENTANMELDUNG

(11) **EP 0 999 081 A2**
(43) Veröffentlichungstag der Anmeldung: **10.05.2000**
(21) Anmeldenummer: 99122202.7
(22) Anmeldetag: 06.11.1999
(51) Int. Cl.: B60K 7/00

(54) **Antriebseinheit für ein elektrisch angetriebenes Fahrzeug**

(30) Priorität: 06.11.1998 DE 19851155
(71) Anmelder: ABM Greiffenberger Antriebstechnik GmbH, 95615 Marktredwitz (DE)
(72) Erfinder: Erhardt, Wolfgang, 95709 Tröstau (DE); Vogl, Josef, 95615 Marktredwitz/Brand (DE)
(74) Vertreter: Tergau & Pohl Patentanwälte

(57) **Zusammenfassung**

Die Erfindung bezieht sich auf eine elektromotorische Antriebseinheit für ein durch eine Batterie elektrisch angetriebenes Fahrzeug, insbesondere für einen batteriebetriebenen Gabelhubwagen. Gemäß der Erfindung wird ein Laufrad (18) von einem batteriegespeisten Drehstrommotor (38) angetrieben, dessen Gehäuse (16) zugleich als Lager für die Radnabe (30) des Laufrades (18) dient.

## Beschreibung

Die Erfindung bezieht sich auf eine Antriebseinheit für ein durch eine Batterie elektrisch angetriebenes Fahrzeug, insbesondere für einen batteriebetriebenen Gabelhubwagen.

Gabelhubwagen dienen zum Anheben, Transportieren und Absetzen von auf sogenannten Paletten befindlichen Lasten in räumlich eng begrenzten Bereichen. Sie bestehen in der Regel aus einer Gabel mit zwei Zinken und sind im Kopf- oder Basisbereich mit einer mit Hilfe einer Deichsel schwenkbaren Antriebseinheit versehen, die ein elektromotorisch angetriebenes Laufrad umfasst. Das Laufrad ist mittig zur Gabelachse angeordnet. Für die Manövrierfähigkeit des Gabelhubwagens auf engstem Raum ist nun der Radius des Hüllkreises entscheidend, den die am Laufrad angeordnete elektromotorische Antriebseinheit hat, da dieser bei einem Schwenkwinkel der Deichsel von 90°, d.h. bei quer zu den Zinken der Gabel gestellten Laufrad, die maximale Längsausdehnung des Gabelhubwagens bestimmt.

Aus der deutschen Offenlegungsschrift 38 26 933 A1 ist ein elektromotorisch angetriebenes Radnabengetriebe für ein Flurfahrzeug bekannt, bei dem das Gehäuse des Elektromotors zugleich Lagergehäuse für die Radnabe des Laufrades ist, wobei als Elektromotor ein Gleichstrommotor vorgesehen ist. Durch die Lagerung des Gleichstrommotors innerhalb des Laufrades kann eine schmale und kompakte Bauart erreicht werden.

Der Erfindung liegt nun die Aufgabe zugrunde, eine Antriebseinheit für ein Fahrzeug mit einem elektromotorisch angetriebenen Laufrad anzugeben, deren Abmessungen gegenüber der bekannten Antriebseinheit weiter verringert ist.

Die genannte Aufgabe wird gemäß der Erfindung gelöst mit den Merkmalen des Patentanspruches 1. Da die Antriebseinheit ein Laufrad enthält, das von einem Drehstrommotor angetrieben ist, dessen Gehäuse zugleich als Lagergehäuse für die Radnabe des Laufrades dient, wird die gesamte Breite des Laufrades als Einbauraum für den Drehstrommotor genutzt, so daß der seitliche Überstand des zum Antreiben des Laufrades erforderlichen Antriebs, d. h. des Drehstrommotors und des ihm nachgeordneten Getriebes erheblich verringert ist.

Da anstelle eines Gleichstrommotors ein Drehstrommotor vorgesehen ist, kann der Hüllkreisradius zusätzlich verringert werden, da Drehstrommotoren gegenüber Gleichstrommotoren gleicher Leistung deutlich kompakter und kleiner gebaut werden können. Außerdem ist mit der Verwendung eines Drehstrommotors eine gegenüber der Verwendung eines Gleichstrommotors verringerte Wartungshäufigkeit verbunden.

Eine solche Antriebseinheit ist besonders für ein Flurförderfahrzeug, insbesondere einen Gabelhubwagen, von Vorteil.

In einer vorteilhaften Ausgestaltung der Erfindung ist die Radnabe über ein einziges Radlager am Gehäuse gelagert. Dadurch kann die Breite der Radnabe weitestgehend verringert werden. Dies trägt zusätzlich zu einer Verkleinerung des Hüllkreisradius bei.

In einer weiteren bevorzugten Ausgestaltung der Erfindung ist zur Lagerung der Motorwelle ein Sensorlager vorgesehen. Auf diese Weise sind die Abmessungen des Drehstrommotors zusätzlich verringert, da der Einbau eines separaten Drehzahlgebers nicht mehr erforderlich ist. Das Sensorlager dient dabei zur Drehzahl, Drehrichtungs- und Wegerfassung, mit denen eine sensibel ansprechende Steuerung verwirklicht werden kann.

Vorzugsweise ist eine elektromagnetisch betätigbare Bremseinrichtung vorgesehen, die auf die Motorwelle wirkt. Dies trägt ebenfalls zu einer Verringerung der Abmessungen und zu einer kompakten Bauweise des gesamten Antriebs bei.

In einer weiteren vorteilhaften Ausgestaltung der Erfindung umfast die Antriebseinheit ein lösbar und drehfest mit der Radnabe verbundenes Laufrad, das insbesondere auf der Montageseite des Laufrades mit der Radnabe verschraubt ist, wobei die zum Versorgen und Steuern des Drehstrommotors, der Bremseinrichtung und des Sensorlagers erforderlichen elektrischen Kabel auf der der Montageseite des Laufrads abgewandten Seite zum Drehstrommotor, zur Bremseinrichtung bzw. zum Sensorlager geführt sind. Durch diese Maßnahme kann das Laufrad gewechselt werden, ohne dass hierzu elektrische Versorgungsleitungen abgeklemmt werden müssen.

In einer weiteren vorteilhaften Ausgestaltung der Erfindung sind das Sensorlager und die Motorbremse auf der der Montageseite abgewandten Seite des Laufrads am Drehstrommotor angeordnet. Dies ermöglicht eine besonders einfache Führung der elektrischen Kabel, da diese nicht mehr im Gehäuse durch das Rad hindurchgeführt werden müssen.

In einer weiteren vorteilhaften Ausgestaltung der Erfindung ist das Gehäuse zugleich zur Aufnahme des Getriebes vorgesehen. Dabei ist insbesondere das von der Welle des Drehstrommotors angetriebene Zahnrad fliegend am Gehäuse gelagert. Dadurch ist der Aufbau des gesamten Antriebsbereiches weiter verkleinert, da ein über die Motorwelle hinausragendes Lagerteil für das Getriebe nicht erforderlich ist. Das Gehäuse dient vorzugsweise zugleich als Radkasten und insbesondere als Tragstruktur für das Schwenklager. Durch diese Maßnahmen kann eine kompakte Gestaltung des gesamten Antriebsbereiches um das Laufrad erzielt werden.

Insbesondere ist aus fertigungstechnischen Gründen das Gehäuse einstückig, beispielsweise aus einem Druckguss, angefertigt.

Durch die Großflächigkeit des einstückig oder integral ausgestalteten Gehäuses ist außerdem eine effiziente Motorkühlung gewährleistet.

Zur weiteren Erläuterung der Erfindung wird auf die Ausführungbeispiele der Zeichnung verwiesen. Es zeigen:
- Fig. 1, 2: einen Gabelhubwagen mit einer Antriebseinheit gemäß der Erfindung in einer Seitenansicht bzw. einer Draufsicht,
- Fig. 3, 4: jeweils eine Antriebseinheit in einer vergrößerten Darstellung in einer seitlichen Draufsicht bzw. in einem Querschnitt parallel zur Radachse,
- Fig. 5: eine weitere vorteilhafte Ausgestaltung der Antriebseinheit ebenfalls in einem Querschnitt.

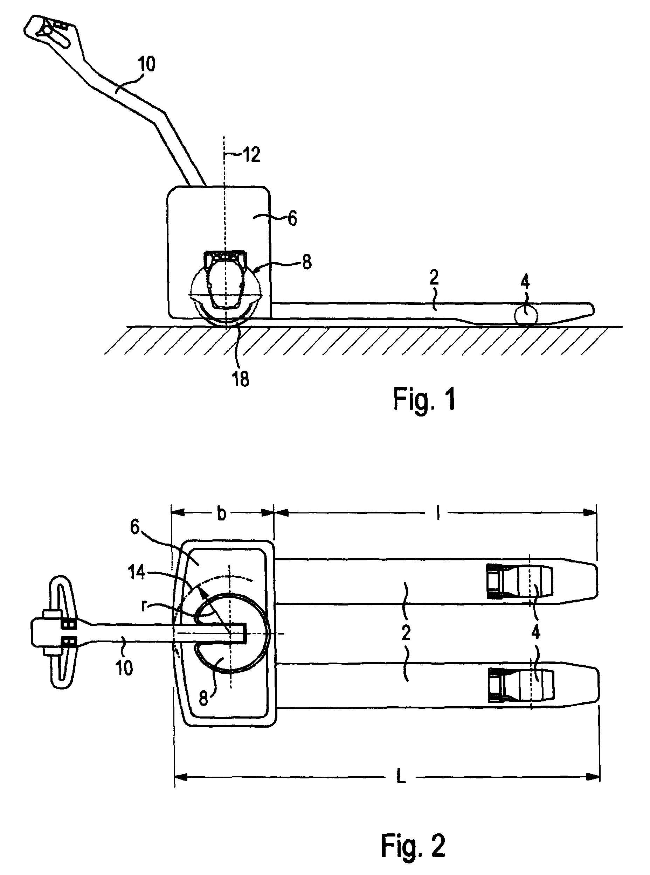

Gemäß Fig.1 und 2 umfasst ein batteriebetriebener Gabelhubwagen zwei Zinken 2, die sich jeweils auf Laufrollen 4 abstützen. Die Zinken 2 bilden von oben gesehen zusammen mit einer Basiskonsole 6 einen U-förmigen Rahmen. Im Bereich der Basiskonsole 6 befindet sich zumindest eine elektrische Antriebseinheit 8 mit einem Laufrad 18, die mit Hilfe einer Handdeichsel 10 um eine vertikale Achse 12 geschwenkt werden kann und zum Lenken des Gabelhubwagens dient. Die Antriebseinheit 8 umfasst einen Drehstrommotor, der über eine in der Basiskonsole 6 angeordnete elektronische Steuereinrichtung von einer 24 V-Batterie gespeist wird.

Die Steuereinrichtung umfasst hierzu einen steuerbaren Umrichter, der aus der von der Batterie abgegebenen Gleichspannung eine dreiphasige Wechselspannung erzeugt. Die Spannung und Frequenz der dreiphasigen Wechselspannung wird dem momentanen Istwert der Fahrgeschwindigkeit und dem Sollwert der Fahrgeschwindigkeit angepasst, der mittels eines an die Handdeichsel 10 angeordneten Steuerhebels vorgegeben wird.

Die gewünschte Beschleunigung und Verzögerung der Antriebseinheit kann in der Steuereinrichtung programmiert werden und somit den Anwenderwünschen optimal angepasst werden. Die Steuereinrichtung ist so ausgelegt, dass die bei Bremsvorgängen frei werdende Energie mittels der Steuereinrichtung wieder in 24 V-Gleichstrom umgewandelt und in die Batterie zurückgespeist wird. Dadurch kann das Fahrzeug wesentlich länger ohne erneutes Aufladen der Batterie betrieben werden.

In Fig. 2 ist gestrichelt ein Ausschnitt aus einem Hüllkreis 14 eingezeichnet, der den Platzbedarf der an der Antriebseinheit 8 angebauten, in der Figur nicht eingezeichneten Antriebsaggregate beim Schwenken der Antriebseinheit 8 um 90° andeutet. Je kleiner der Radius r des Hüllkreises 14 ist, desto kleiner ist die Gesamtlänge L des Gabelhubwagens, die sich aus der Summe der durch Normung vorgegebenen Länge I der Zinken 2 und der Breite b der Basiskonsole 6 ergibt. Diese Gesamtlänge L bestimmt die Diagonalabmessung des Gabelhubwagens und legt damit die Mindestbreite fest, die ein zwischen zwei Lagerreihen befindlicher Gang haben muss, damit der Gabelhubwagen noch gewendet werden kann.

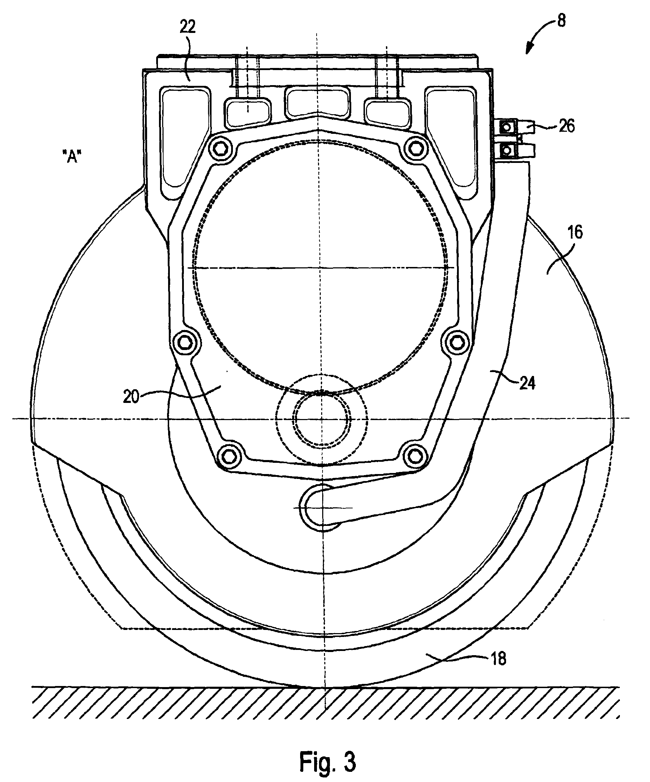

Fig. 3 zeigt die Draufsicht auf die sogenannte A-Seite der Antriebseinheit 8. Die Antriebseinheit 8 ist in einem Gehäuse 16 drehbar gelagert. Auf einer im wesentlichen hohlzylindrischen Radnabe der Antriebseinheit 8 ist das Laufrad 18 befestigt, das auf der der A-Seite gegenüberliegenden B-Seite demontiert werden kann.

Das Gehäuse 16 ist mit einem demontierbaren Getriebedeckel 20 versehen, hinter dem im Gehäuse 16 das zum Antreiben des Laufrades 18 erforderliche Getriebe, im Beispiel ein gestrichelt veranschaulichtes Zahnradgetriebe, angeordnet ist. Das Gehäuse 16 umfasst noch eine Tragstruktur 22, die das Schwenklager für die Handdeichsel aufnimmt. Von der Tragstruktur 22 ausgehend führt ein Schutzschlauch 24 in das Innere des Gehäuses 16, in dem die zur Versorgung und Steuerung der Antriebseinheit 8 erforderlichen elektrischen Leitungen angeordnet sind. Diese Leitungen werden im Beispiel an eine Schraubklemme 26 geführt und angeschlossen, die an der Tragstruktur 22 fixiert ist.

In die Figur ist noch gestrichelt eingezeichnet eine Vergrößerung des den Radkasten bildenden Teils des Gehäuses 16, die in erster Linie zum Fußschutz gedacht ist und mit der verhindert wird, dass das Antriebsrad über einen Fuß der Bedienperson rollen kann.

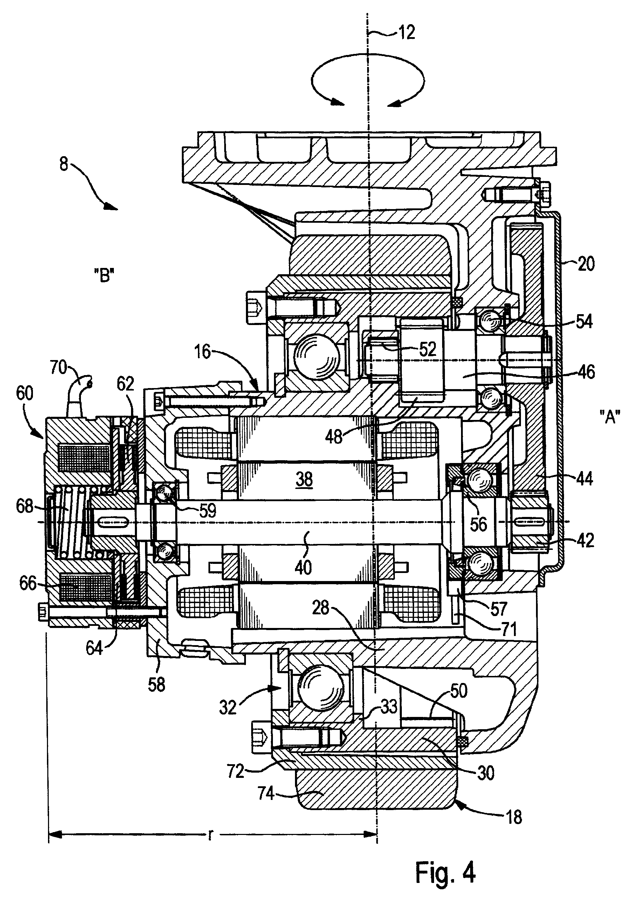

Gemäß Fig. 4 umfasst das Gehäuse 16 ein im Wesentlichen hohlzylindrisches Lagerteil 28, das als Lager für die im Wesentlichen hohlzylindrische Radnabe 30 der Antriebseinheit 8 dient. Zwischen Radnabe 30 und Lagerteil 28 ist ein einziges Radlager 32 angeordnet, welches jeweils außen und innen axial fixiert ist. Das Gehäuse 16 nimmt somit das Radlager 32 für die Radnabe 30 der Antriebseinheit 8 auf und dient auf diese Weise als Lagergehäuse für die Radnabe 30.

Das Radlager 32 wird durch einen Innenring und einen Außenring gebildet, zwischon denen die Kugeln in einem vorgefertigten Käfig angeordnet sind. Das Radlager 32 wird in die Radnabe 30 bis zum Anschlag 33 eingepresst. Durch ein Untermaß der Lagerbohrung in der Radnabe 30 wird der Außenring zusammengedrückt, wodurch das Radlager 32 nahezu spielfrei wird.

Die mit dem Radlager 32 versehene Radnabe 30 wird nun auf ds Gehäuse 16 geschoben. Der Gehäusedurchmesser beim Sitz des Radlagers 32 wird dabei so gewählt, dass sich auch hier eine Presspassung ergibt. Durch das nun nahezu spielfreie Radlager 32 und den festsitzenden Innen- bzw. Außenring ergibt sich mit nur einem Radlager 32 eine hinreichend genaue, kippfreie Lagerung der Radnabe 30 mit der Innenverzahnung 50. Da nur ein einziges Radlager 32 benötigt wird, wird die Aufbaubreite zusätzlich verringert.

Im Innenraum des Lagerteils 28 ist ein Drehstrommotor 38, insbesondere ein Drehstrom-Asynchronmotor, angeordnet, dessen Motorwelle 40 drehmomentschlüssig mit einem ersten Zahnrad 42 verbunden ist, das mit einem zweiten Zahnrad 44 kämmt, deren Welle 46 mit einem Antriebsritzel 48 versehen ist, das in eine am Innenumfang der Radnabe 30 angeordnete Innenverzahnung 50 eingreift und die Radnabe 30 antreibt. Die Welle 46 des zweiten Zahnrads 44 ist an ihrem dem zweiten Zahnrad 44 abgewandten Ende in einem Nadellager 52 und im Bereich des zweiten Zahnrads 44 in einem Kugellager 54 gelagert.

Das zweite Zahnrad 44 ist fliegend im Gehäuse 16 gelagert, d. h. die Welle 46 ist nur abtriebseitig über das Nadellager 52 und das Kugellager 54 am Gehäuse 16 gelagert. Da die Welle 46 nicht am Getriebedeckel 20 gelagert ist, kann dieser aus einem einfachen Stanzteil hergestellt sein und muss auch nicht gegenüber dem Gehäuse des Nadellagers 52 zentriert werden, so dass lediglich das einstückige Lagergehäuse 16 mit entsprechend engen Toleranzen gefertigt werden muss.

Die Motorwelle 40 ist abtriebseitig in einem Sensorlager 56 gelagert, in dem ein Drehimpulsgeber 57 integriert ist, mit dem die Drehzahl und damit der momentane lstwert der Fahrgeschwindigkeit, die Drehrichtung und als Maß für den zurückgelegten Weg die Anzahl der Umdrehungen des Drehstrommotors 38 erfasst werden.

Das Lagerteil 28 durchsetzt den Innenraum der Radnabe 30 und ist an seiner dem Getriebe abgewandten Stirnfläche lösbar mit einem Lagerdeckel 58 versehen, der ein Kugellager 59 zur Lagerung der Motorwelle 40 aufnimmt.

Auf dem Lagerdeckel 58 ist eine elektromagnetische Bremseinrichtung 60 fixiert. Die Motorwelle 40 durchsetzt den Lagerdeckel 58 und erstreckt sich in den Innenraum der Bremseinrichtung 60 und ist dort drehmomentschlüssig mit einer Bremsscheibe 62 verbunden. Der Bremsscheibe 62 ist ein Bremsring 64 zugeordnet, der von einem Elektromagneten 66 gegen die Wirkung einer Feder 68 von der Bremsscheibe abgehoben ist, so dass die Bremsscheibe 62 frei laufen kann. Bei nicht bestromtem Elektromagneten 66 wird der Bremsring 64 durch die Wirkung der Feder 68 auf die Bremsscheibe 62 gedrückt und bewirkt ein schnelles Abbremsen der Motorwelle 40.

Die zum Versorgen der gesamten Antriebseinheit 8 erforderlichen elektrischen Leitungen, von denen in der Figur nur eine zum Elektromagneten 66 führende Leitung 70 und eine zum Sensorlager führende Leitung 71 veranschaulicht ist, werden durch das Innere des Gehäuses 16 auf die sogenannte A-Seite der Antriebseinheit 8 geführt.

Auf die Radnabe 30 ist das Laufrad 18 aufgeschoben, das einen im Schnitt L-förmig umgebogenen Tragring 72 für einen Laufring 74 aufweist, der die Radnabe 30 flanschartig umgreift und seitlich mit ihr verschraubt ist, und auf diese Weise zugleich das Radlager 32 axial fixiert. Da die Leitung 70 im Gehäuse 16 durch das Innere der Radnabe 30 hindurchgeführt ist, kann das Laufrad 18 auf der B-Seite einfach demontiert werden, ohne dass hierzu elektrische Kabelverbindungen gelöst werden müssen.

Die integrale Bauart des Gehäuses 16 bewirkt aufgrund der damit verbundenen großen Oberfläche eine effiziente Kühlung des Drehstrommotors 38.

In der Figur ist außerdem der Radius r des durch Schwenkbewegung der Antriebseinheit 8 um die Achse 12 sich ergebenden Hüllkreises eingezeichnet. Der Figur ist zu entnehmen, daß dieser Radius r nur unwesentlich größer ist als der Außenradius des Laufrades 18 und somit eine Schwenkbewegung der Antriebseinheit 8 auf engstem Raume ermöglicht.

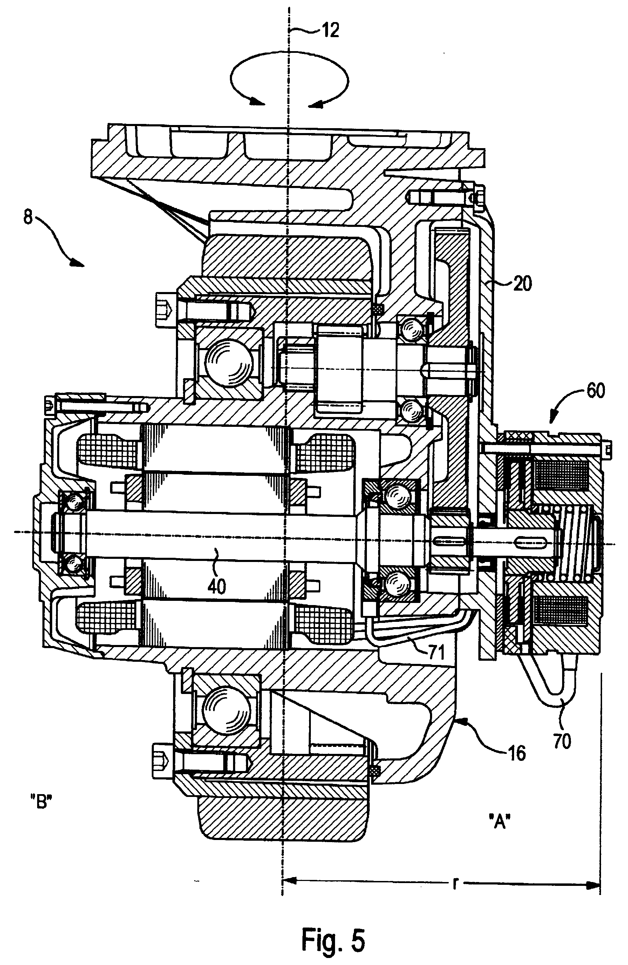

Im Ausführungsbeispiel gemäß Figur 5 durchsetzt die Motorwelle 40 den Getriebedeckel 20, der seinerseits die Bremseinrichtung 60 trägt. Getriebe und Bremseinrichtung 60 sind in diesem Ausführungsbeispiel somit auf derselben Seite des Drehstrommotors 38 angeordnet. Durch diese Maßnahme ist die Querausdehnung der gesamten Antriebseinheit 8 auf der A-Seite annähernd gleich der Querausdehnung auf der B-Seite und der Radius r des Hüllkreises, der diesmal durch die etwas größere Querausdehnung auf die A-Seite festgelegt ist, ist gegenüber der Ausführungsform gemäß Fig. 4 weiter verringert. Ein weiterer Vorteil dieser Ausführungsform besteht auch darin, dass das Anschlußkabel 70 für die elektromagnetische Bremseinrichtung 60 nicht durch das Gehäuse 16 hindurchgeführt werden muss.

### Bezugszeichenliste

- 2: Zinken
- 4: Laufrolle
- 6: Basiskonsole
- 8: Antriebseinheit
- 10: Handdeichsel
- 12: Achse
- 14: Hüllkreis
- 16: Gehäuse
- 18: Laufrad
- 20: Getriebedeckel
- 22: Tragstruktur
- 24: Schutzschlauch
- 26: Schraubklemmen
- 28: Lagerteil
- 30: Radnabe
- 32: Radlager
- 33: Anschlag
- 38: Drehstrommotor
- 40: Motorwelle
- 42: erstes Zahnrad
- 44: zweites Zahnrad
- 46: Welle
- 48: Ritzel
- 50: Innenverzahnung
- 52: Nadellager
- 54: Kugellager
- 56: Sensorlager
- 57: Drehimpulsgeber
- 58: Lagerdeckel
- 59: Kugellager
- 60: Bremseinrichtung
- 62: Bremsscheibe
- 64: Bremsring
- 66: Elektromagnet
- 68: Feder
- 70: Leitung
- 71: Leitung
- 72: Tragring
- 74: Laufring
- r: Radius
- L: Gesamtlänge
- A: A-Seite
- I: Länge (Zinken)
- B: B-Seite
- b: Breite

## Patentansprüche

1. Antriebseinheit (8) für ein durch eine Batterie elektrisch angetriebenes Fahrzeug, insbesondere für einen batteriebetriebenen Gabelhubwagen, mit einem Laufrad (18), das von einem batteriegespeisten Drehstrommotor (38) angetrieben ist, dessen Gehäuse (16) zugleich als Lagergehäuse für die Radnabe (30) des Laufrads (18) dient.

2. Antriebseinheit (8) nach Anspruch 1, bei dem die Radnabe (30) über ein einziges Radlager (32) am Gehäuse (16) gelagert ist.

3. Antriebseinheit (8) nach Anspruch 1 oder 2, bei dem zur Lagerung der Motorwelle (40) des Drehstrommotors (38) ein Sensorlager (56) vorgesehen ist.

4. Antriebseinheit (8) nach einem der vorhergehenden Ansprüche, mit einer elektromagnetisch betätigbaren Bremseinrichtung (60).

5. Antriebseinheit (8) nach Anspruch 4, bei dem die Bremseinrichtung (60) auf die Motorwelle (40) wirkt.

6. Antriebseinheit (8) nach einem der vorhergehenden Ansprüche, bei dem das Laufrad (18) lösbar und drehfest mit der Radnabe (30) verbunden ist.

7. Antriebseinheit (8) nach Anspruch 6, bei dem das Laufrad (18) auf einer Montageseite der Antriebseinheit (8) mit der Radnabe (30) verschraubt ist, wobei die zum Versorgen und Steuern des Drehstrommotors (38), der Bremseinrichtung (60) und des Sensorlagers (56) erforderlichen elektrischen Leitungen (70,71) auf der der Montageseite des Laufrades (18) abgewandten Seite zum Drehstrommotor (38), zur Bremseinrichtung (60) bzw. zum Sensorlager (56) geführt sind.

8. Antriebseinheit (8) nach Anspruch 7 in Verbindung mit Anspruch 3 und 4, bei dem das Sensorlager (56) und die Bremseinrichtung (60) auf der der Montageseite des Laufrades (18) abgewandten Seite des Drehstrommotors (38) angeordnet sind.

9. Antriebseinheit (8) nach einem der vorhergehenden Ansprüche, bei dem die Radnabe (30) der Antriebseinheit (8) an ihrem Innenumfang mit einer Verzahnung (50) versehen ist, die mit einem drehmomentschlüssig mit der Motorwelle (40) verbundenen Antriebsritzel (48) kämmt.

10. Antriebseinheit (8) nach einem der vorhergehenden Ansprüche, bei dem das Gehäuse (16) für den Drehstrommotor (38) zugleich zur Aufnahme des Getriebes vorgesehen ist.

11. Antriebseinheit (8) nach Anspruch 10, mit einem Getriebe (42,44,48,50), dessen von der Welle (40) des Drehstrommotors (38) angetriebenes Zahnrad (44) fliegend am Gehäuse (16) gelagert ist.

12. Antriebseinheit (8) nach Anspruch 10 oder 11, bei dem das Gehäuse (16) zugleich als Radkasten zum Abdecken des Antriebsrades ausgestaltet ist.

13. Antriebseinheit (8) nach Anspruch 12, bei dem das Gehäuse zugleich als Tragstruktur (22) für das Schwenklager der Handdeichsel (10) ausgestaltet ist.

14. Antriebseinheit (8) nach einem der Ansprüche 10 bis 13, bei dem das Gehäuse (16) einstückig ist.
